# EUROPEAN PATENT SPECIFICATION

(11) **EP 1 024 433 B1**
(45) Date of publication and mention of the grant of the patent: **27.04.2005**
(21) Application number: 98923173.3
(22) Date of filing: 09.06.1998
(51) Int. Cl.: G06F 13/40

(54) **BUS CONVERSION ADAPTER**
BUS-UMFORMUNGS-ADAPTER
ADAPTATEUR DE CONVERSION DE BUS

(30) Priority: 16.10.1997 JP 28376397
(43) Date of publication of application: 02.08.2000
(73) Proprietor: Buffalo Inc., Nagoya-shi, Aichi 457-8520 (JP)
(72) Inventor: HIRANO, Kentaro Melco Inc. High-tech Center, Nagoya-shi Aichi 457-8520 (JP); SAITO, Shinsuke Melco Inc. High-tech Center, Nagoya-shi Aichi 457-8520 (JP)
(74) Representative: Sturt, Clifford Mark
(86) International application number: PCT/JP1998/002532
(87) International publication number: WO 1999/021097

(56) References cited:
- JP-A- 4 014 159
- JP-A- 5 094 404
- JP-A- 5 165 761
- JP-A- 7 200 192
- JP-A- 61 175 845
- JP-A- 63 118 966

## Description

### Technical Field

The present invention relates to a SCSI-IDE bus conversion adapter.

### Background Art

In a small-scale computer today, a number of buses are present, reflecting the circumstances of its development, and where peripheral units are to be connected, a hardware device is provided corresponding to each of the buses.

In the conventional specification mentioned above, as an exclusive controller is provided for each specific bus, it cannot be connected to any other bus even though functionally it could be used with any other bus.

Especially in recent years, since the specification of each bus presupposes functions required for the corresponding hardware device, different buses of which the specifications are determined independently of one another inevitably require the same system for the same function. Therefore, a plurality of similar buses are unavoidably used in a computer.

The present invention has been attempted in view of this problem, and its object is to provide a SCSI-IDE bus conversion adapter capable of utilizing the functions of hardware more effectively.

JP 7-200192 discloses an optical disk apparatus having a SCSI standard interface for connection to a host CPU, characterised in that a controller section for converting the interface into an interface conforming to another standard is added to the optical disk apparatus to provide an interface conforming to the another standard for connection to the host CPU.

### Disclosure of the Invention

In order to achieve the above-stated object, the invention as it pertains to Claim 1 is a SCSI-IDE bus conversion adapter to intervene between a SCSI bus and an IDE bus, which are buses of different systems, and accomplish matching between the two buses, and has a configuration comprising a command interface conversion means for accomplishing mutual matching between command systems while matching commands on the IDE side by adding dummy command data to commands on the SCSI side; and a data bus conversion means for, when different data bus widths are to be matched and data are to be transferred between the SCSI bus and the IDE bus, inputting or outputting through even number address data on the IDE side to or from the SCSI side and then inputting or outputting odd number address data, and having a direct transferring means for transferring, at the time of transferring data, data between the two buses in accordance with a DMA system.

According to the invention pertaining to Claim 1 having the above-described configuration, the SCSI-IDE bus conversion adapter, while intervening between the SCSI bus and the IDE bus, which are buses of different systems, accomplishes matching between the two buses. Therefore, availability is achieved by connecting this SCSI-IDE bus conversion adapter to one of the buses and connecting peripheral devices, which are to be connected to the other bus, to the SCSI-IDE bus conversion adapter.

Here, the SCSI bus and the IDE bus have different command systems, and the SCSI-IDE bus conversion adapter has a command interface conversion means for accomplishing mutual matching between the command systems.

This command interface conversion means accomplishes mutual matching between the command systems by converting commands effective on one of the buses into commands effective on the other bus and inputting/outputting the converted commands.

For instance, ATAPI is an expanded system of AT protocol and, as its has elements in common with the SCSI command system, it permits conversion in a relatively unlimited state in this bus conversion adapter. Where conversion is to be carried out between the ATAPI bus and the SCSI bus, more specifically, the aforementioned command interface conversion means accomplishes matching with commands on the ATAPI side by adding dummy command data to commands on the SCSI side.

Although the command system on the ATAPI side uses 12 bytes against 6 to 12 bytes used by that on the SCSI side, the latter half of the bytes on the ATAPI side are merely reserved for possible use in expansion, but are not actually used. Accordingly, the command interface conversion means can accomplish matching with commands on the ATAPI side by only adding dummy command data to commands on the SCSI side.

Incidentally, the practical necessity of bus conversion requires conversion between the IDE bus and the SCSI bus, but since an ATAPI bus is compatible with an IDE bus, any command on the IDE bus can be used on the ATAPI bus even if some commands on the ATAPI bus cannot be used on the IDE bus. Therefore, an adapter for conversion between the SCSI bus and the ATAPI bus can obviously function as one for conversion between the IDE bus and the SCSI bus.

On the other hand, the SCSI bus and the IDE bus, having different data buses, has a data bus conversion means for mutually exchanging data between the data buses.

This data bus conversion means converts data to accomplish matching to enable mutual data inputting/ outputting between the buses having different data buses.

More specifically, the data bus conversion means has a configuration to accomplish matching by inputting or outputting through even number address data on the IDE side to or from the SCSI side and then inputting or outputting odd number address data.

While the main stream of the data bus width of SCSI is currently in byte terms, that on the IDE side is in word terms. Accordingly, matching be can accomplished by inputting or outputting through even number address data on the IDE side to or from the SCSI side and then inputting or outputting odd number address data.

Incidentally, where a command is to be interpreted to generate another command corresponding thereto, usually a step for judgment thereon is added, and data are read in at least once, followed by outputting of the data. Interpreting a command cannot substantially avoid such a step, but it is unnecessary for transferring the data and constitutes a factor to retard the speed. For this reason, the aforementioned data bus conversion means is provided with a direct transferring means for transferring data in accordance with a DMA system between the two buses when data are to be transferred. The DMA system in this context is a transfer system for directly reading and writing data without an intervening CPU or the like, and can be realized by the use of a general purpose DMA controller or the like. Whereas such a direct transfer means is extensively applicable, it contributes to enhancing the overall throughput where a command is to be interpreted to generate another command corresponding thereto.

Further, there should be no difference in bus width where a DMA is to be used.

Incidentally, while matching between SCSI and IDE can be accomplished substantially only by adding dummy data because their command systems closely resemble each other, commands are not always like them. For this reason, the invention as it pertains to Claim 2 has a configuration, as claimed for the bus conversion adapter in any of Claim 1, in which the command interface conversion means is provided with a command data interpreting means for interpreting commands inputted from one of the buses and a command generating means for generating and outputting commands on the other bus corresponding to the interpreted commands.

In the invention pertaining to Claim 2, configured as described above, the command data interpreting means interprets commands inputted from one of the buses and the command generating means generates and outputs commands on the other bus corresponding to the interpreted commands. Therefore, it is extensively applicable irrespective of any difference in command system which cannot be coped with merely by adding dummy data.

As hitherto described, the present invention makes it possible, in connecting peripheral devices between SCSI and IDE which are in frequent use today, to eliminate any difference in command system by merely adding or removing dummy data, resulting in very easy matching of command systems, to directly transfer data and thereby enhance the data transfer speed while matching data bus systems very easily by converting even number address data and odd number address data of word data into byte data, and to provide an SCSI-IDE bus conversion adapter which, virtually for the first time, enables conversion between a SCSI and an IDE bus of this kind.

Furthermore, the invention pertaining to Claim 2 can be applied even where command systems greatly differ from each other.

Further to add, as long as it is compatible with an ATAPI bus, it is compatible with an IDE bus.

### Brief Description of Drawings

Fig. 1 is a schematic diagram of a bus system to which a bus conversion adapter pertaining to one mode of carrying out the present invention is applied.
Fig. 2 is a diagram illustrating command packets of an SCSI bus and an ATAPI bus.
Fig. 3 is a diagram illustrating the relationship of correspondence between byte data and word data on the SCSI bus and the ATAPI bus.
Fig. 4 is a diagram illustrating the schematic logical configuration and pin assignment of the bus conversion adapter.
Fig. 5 is a schematic block diagram illustrating another example of configuration of the bus conversion adapter.
Fig. 6 is a diagram illustrating phase shifts on the SCSI bus.
Fig. 7 is a flowchart illustrating the processing in the selection phase.
Fig. 8 is a flowchart illustrating the processing in the command phase.
Fig. 9 is a flowchart illustrating the processing in the data in phase.
Fig. 10 is a flowchart illustrating the processing in the data out phase.
Fig. 11 is a flowchart illustrating the processing in the status phase.
Fig. 12 is a flowchart illustrating the processing in the message phase.
Fig. 13 is a schematic block diagram of a bus conversion adapter pertaining to another mode of carrying out the invention.
Fig. 14 is an external perspective view of the bus.
Fig. 15 is a perspective view illustrating how the bus conversion adapter is mounted on an IDE hard disk.
Fig. 16 is a block diagram of the bus conversion adapter.
Fig. 17 is a block diagram of a bus conversion adapter pertaining to another mode of carrying out the invention.
Fig. 18 is a block diagram of a bus conversion adapter pertaining to another mode of carrying out the invention.
Fig. 19 is a block diagram of a bus conversion adapter pertaining to another mode of carrying out the invention.
Fig. 20 is a diagram illustrating an outline of command conversion.
Fig. 21 is a diagram illustrating a specific example of command conversion.
Fig. 22 is a chart illustrating the relationship of correspondence in converting SCSI commands into IDE commands.
Fig. 23 is a flowchart illustrating the procedure of DMA transfer.
Fig. 24 is a flowchart illustrating the procedure of error notification from the IDE bus to the SCSI bus.

### Best Modes for Carrying Out the Invention

The best modes for carrying out the present invention will be described below with reference to the accompanying drawings.

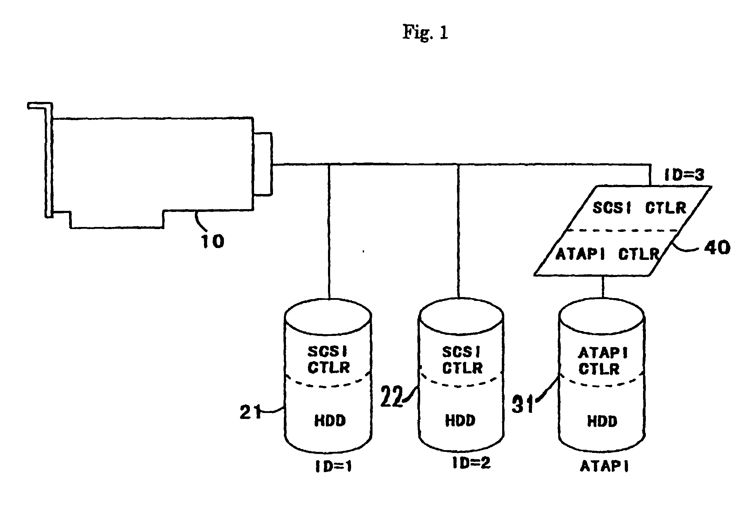

Fig. 1 schematically illustrates a bus system to which a bus conversion adapter pertaining to one mode of carrying out the invention is applied.

In the diagram, a computer per se (not shown) is mounted with an SCSI card 10 to make an SCSI bus available, and to the SCSI card 10 are connected in a daisy chain form to SCSI-specified hard disks 21 and 22 and one ATAPI-specified hard disk 31. It is to be noted that the ATAPI-specified hard disk 31 is connected via a bus conversion adapter 40 which embodies one mode of carrying out the invention. Hereupon, it is supposed that an ID of "1" is assigned to the first SCSI-specified hard disk 21, one of "2" to the second SCSI-specified hard disk 22, and similarly "3" as an ID within the SCSI bus to the third ATAPI-specified hard disk 31. Of course it is supposed that the bus conversion adapter 40 recognizes this ID "3" and appropriately controls the ATAPI-specified hard disk 31. Here the path between the bus conversion adapter 40 and the ATAPI-specified hard disk 31 corresponds to the ATAPI bus.

Although the SCSI bus and the ATAPI bus are applied as an example of different buses in this mode of implementation, it is of course applicable to other buses as well.

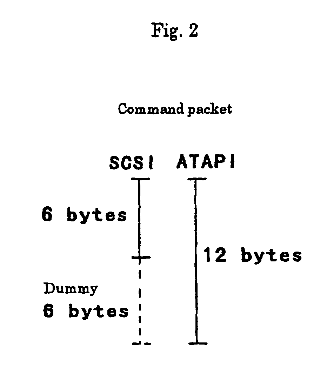

Before describing the configuration of the bus conversion adapter 40, the difference between the SCSI bus and the ATAPI bus will be explained. In terms of command system, they have the common feature of delivering commands in a command packet, but differ in the length of a command packet. Thus, the difference is that while the SCSI bus uses a 6-byte command packet, the ATAPI bus uses a 12-byte command packet. However, as the latter 6 bytes for the ATAPI bus are merely reserved for use in possible expansion in the future, in substance the length can be equalized by adding dummy commands as shown in Fig. 2.

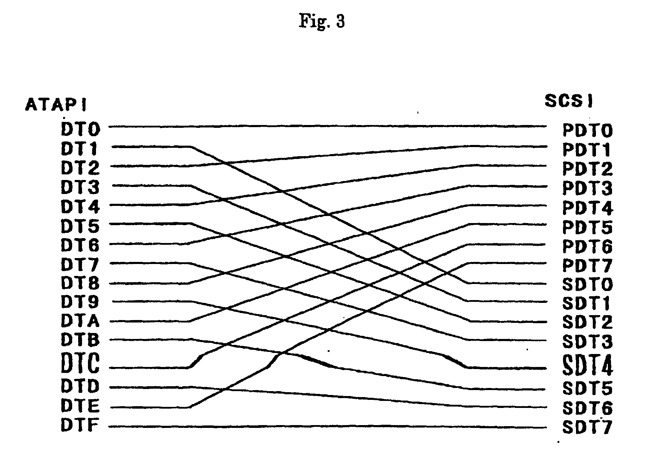

Regarding data buses, on the other hand, they have the common feature of delivering data in parallel, but differ in bus width. Thus, while the SCSI bus uses an 8-bit wide byte unit, the ATAPI bus uses a 16-bit word unit. Regarding the sequence of transferred data here, the even number address data and the odd number address data of word data respectively correspond to the first and second bytes of byte data as shown in Fig. 3. Therefore, when data are to be transferred from the ATAPI bus to the SCSI bus, the even number address data and the even number address data of word data can be divided into 2 bytes and successively transferred as such, and when data are to be transferred from the SCSI but to the ATAPI bus, each consecutive 2 bytes can be converted into word data as even number address data and odd number address data, and transferred as such.

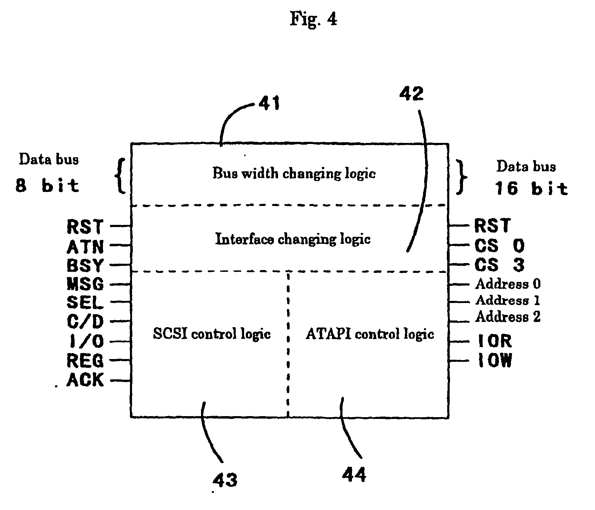

A schematic configuration of the bus conversion adapter 40 which matches the above-described differences in command system and data bus is illustrated in Fig. 4. The internal logics can be broadly classified into a bus width changing logic 41, an interface changing logic 42, a SCSI control logic 43 and an ATAPI control logic 44.

The bus width changing logic 41, which is a logic for matching data transfers between the byte-based SCSI bus and the word-based ATAPI bus as described above, functions with substantial independence according to the timing clock for data transfers. Thus the hardware configuration and software to be described below of this bus width changing logic 41 constitute a data bus conversion means. It goes without saying that, while only the bus width is changed between the SCSI bus and the ATAPI bus, appropriate changes are made when matching of data transfers is to be accomplished with a data bus consisting of another system.

Although this mode of implementation uses a configuration consisting of the aforementioned bus width changing logic 41, interface changing logic 42, SCSI control logic 43 and ATAPI control logic 44 to compose the bus conversion adapter 40 for connecting the ATAPI-specified hard disk 31 to the SCSI bus, a more versatile configuration can be used as well.

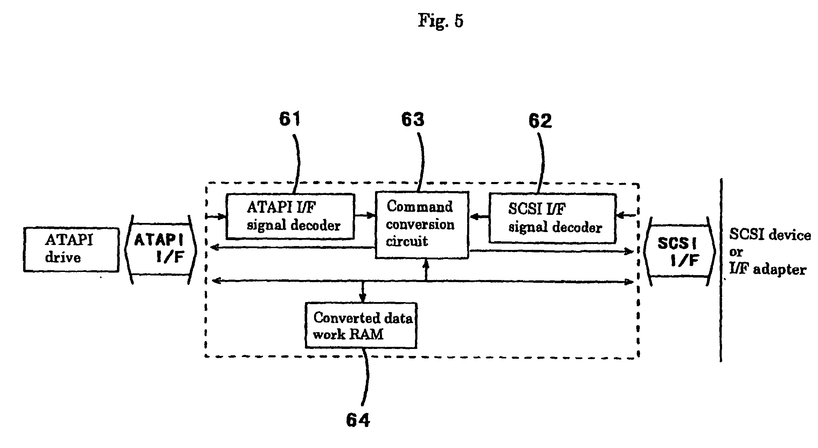

Fig. 5 illustrates an example of configuration embodying consideration for more versatile utilization, wherein signal decoders 61 and 62 respectively corresponding to individual buses such as the ATAPI bus and the SCSI bus are provided, and commands are interpreted and converted by a command conversion circuit 63, which constitutes the principal part, to accomplish mutual matching. There is also provided a work RAM 64 for converted data to be available for use as required. Therefore, when use on another bus is required, merely providing a signal decoder which can transmit commands and the like to the command conversion circuit 63 would be sufficient.

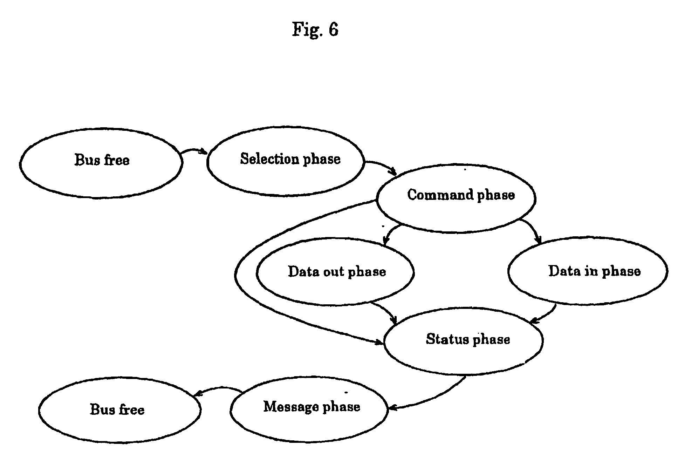

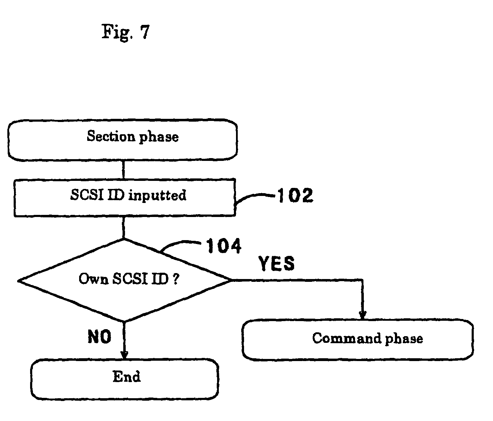

On the other hand, where matching is to be accomplished between different buses, such as SCSI and ATAPI, the differences including that in command system, it is carried out by causing the interface changing logic 42, SCSI control logic 43 and ATAPI control logic 44 to execute processing, correspondingly to the actual phase shifts on the SCSI bus shown in Fig. 6, in accordance with the flowcharts of Fig. 7 and thereafter.

Next will be described the operation in this mode of implementation using the above-stated configuration with reference to phase shifts shown in Fig. 6 and the flowcharts of Fig. 7 and thereafter.

On the SCSI bus, the operation takes place in eight-way phase shifts. When, at first from a bus-free state, a computer (not shown) attempts to access the ATAPI-specified hard disk 31, an SCSI-ID "3" which represents an attempt to access the SCSI bus is sent out via a SCSI card 10, and a shift to the selection phase takes place.

In the selection phase, as shown in Fig. 7, the SCSI-ID sent out on the SCSI bus is inputted by each of the SCSI devices 21, 22 and 40 at step 102, and each judges at step 104 whether or not the ID is an SCSI-ID assigned to itself. If the ID is not its own SCSI-ID, the selection phase will end at this particular device or, if the ID is its own SCSI-ID, this device will shift to the command phase.

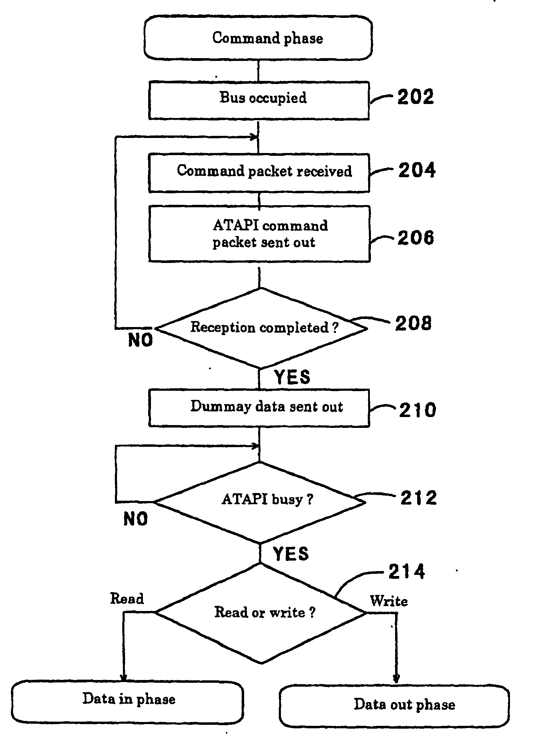

Upon shifting to the command phase, as shown in Fig. 8, first the bus is occupied at step 202. And, if data in a command packet are received at step 204, they are sent out as command packet data to the ATAPI bus at step 206. At step 208, it is judged whether or not the reception of the command packet was completed and, if not, the same processing will be repeated on data in the command packet which is sent next. As a command packet on the SCSI bus consists of 6 bytes, after reception of a 6-byte command packet, dummy data are sent out to the ATAPI bus at step 210.

The ATAPI-specified hard disk 31 of the ATAPI bus, upon receiving the command packet, outputs a busy signal to the ATAPI bus. Incidentally, though the ATAPI bus executes various ways of processing by writing signals into a task file register, its operation is expressed here as outputting a busy signal for the sake of convenience.

The bus conversion adapter 40, waiting for the outputting of this busy signal at step 212, judges at step 214 whether the aforementioned command packet instructs reading or writing and, if it instructs reading, will shift to the data in phase or, if it instructs writing, will shift to the data out phase.

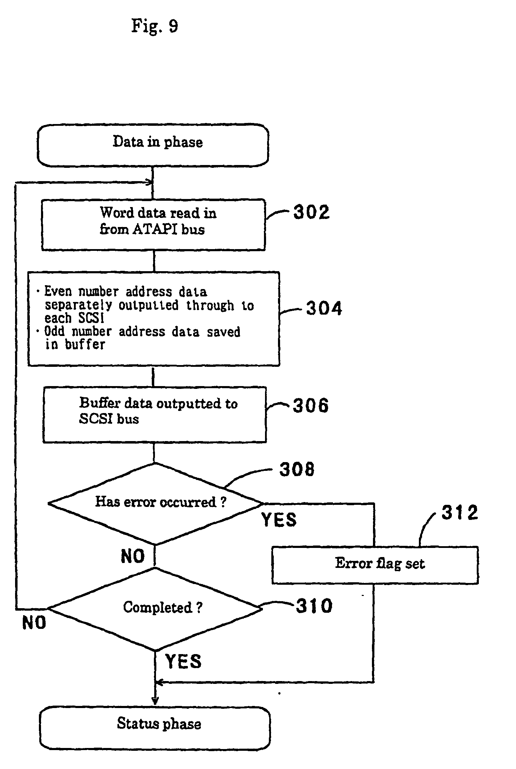

In the data in phase, data are inputted to the bus conversion adapter 40 from the ATAPI bus and outputted to the SCSI bus. As shown in Fig. 9, the bus conversion adapter 40 at step 302 reads word data sent out from the ATAPI-specified hard disk 31 on the ATAPI bus, and at step 304, delivers only the even number address data out of them through to the SCSI bus and stores the odd number address data into a buffer. Then at step 306, it delivers at the next data delivery timing the data stored in the buffer to the SCSI bus. And at step 310, it judges whether or not only those data designated by the command packet have been transferred, and repeats the processing described above until the transfer is completed. On the other hand, if the data transfer has been completed, it shifts to the status phase. However, if any error has occurred during this data transfer, an error flag will be set at step 312 after going through step 308, and this data in phase will be completed without waiting for the completion of step 310, followed by a shift to the status phase.

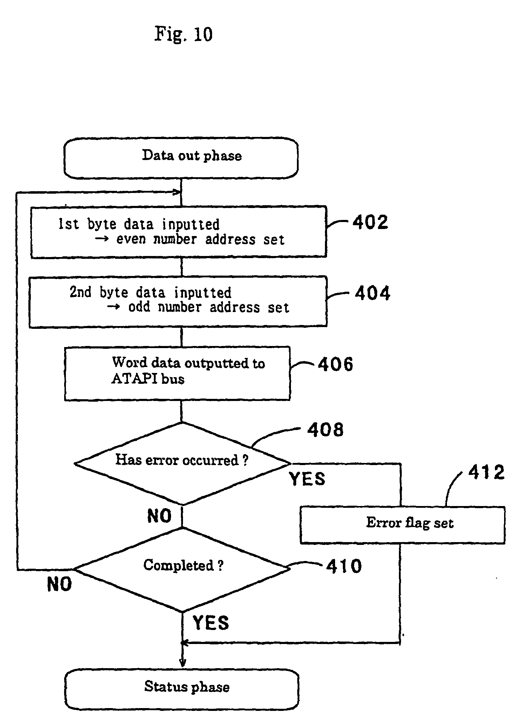

Or if the command is for writing, a shift to the data out phase shown in Fig. 10 will have taken place. In this data out phase, if at step 402 the first byte data are inputted from the SCSI bus, the work area for word data will be set for even number address data; if at step 404 the second byte data are inputted from the SCSI bus, the work area for word data will be set for odd number address data; and at step 406 word data in that work area will be delivered to the ATAPI bus. Both the SCSI bus and the ATAPI bus handle transfers in prescribed block units, such as sectors, and as the length of a block is in an even number, it is impossible for a data transfer to be completed without any data inputted from the SCSI bus constituting word data. However, processing for completion on the way may be added as required with the possibility of an odd number taken into consideration.

Upon completion of data inputting from the SCSI bus without an error, a shift to the status phase takes place, or if an error arises on the way, an error flag will be set at step 412 after going through step 408, and a shift to the status phase without waiting for the completion of step 410.

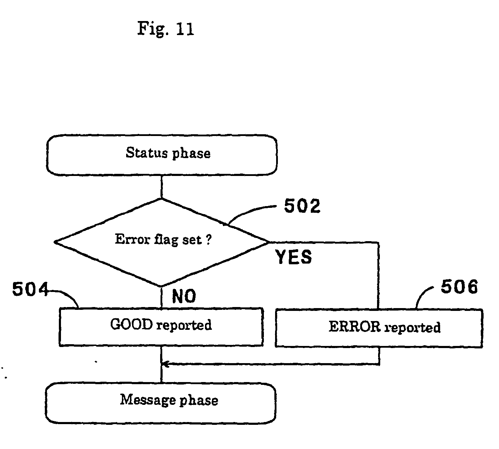

In the status phase, as shown in Fig. 11, depending on whether or not an error flag is set at step 502, the bus conversion adapter 40 alters the contents and reports to the SCSI bus. Thus, if no error flag is set, it will report at step 504 that the processing was completed in a "GOOD" condition in the data in phase or the data out phase or, if an error flag is set, it will report at step 506 that an error occurred in the data in phase or the data out phase, and shift to the message phase.

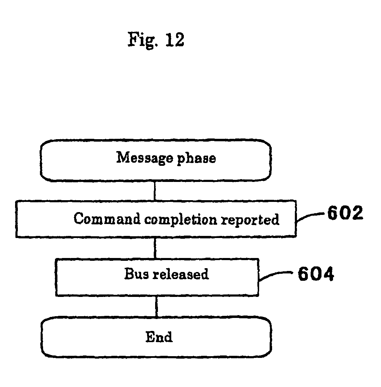

In the message phase, as shown in Fig. 12, at step 602 "command completion" is reported to show what was instructed by the computer has been finished irrespective of the presence or absence of an error, and at step 604 the bus is freed. This results in return to the bus free phase. Of course, if there was an error, the computer will cause similar processing to be repeated.

As described above, this mode of implementation makes it possible, by using the bus conversion adapter 40, to use the ATAPI-specified hard disk 31 connected to the SCSI bus.

Here, in bus conversion as well, a greater advantage than merely making available for use peripheral devices on another bus can be attained by focusing on a particular function. For instance, if it is only to use the ATAPI-specified hard disk according to the SCSI specifications, there is no need to make it adaptable to every aspect of the SCSI specifications, but it will be sufficient to make it responsive to a limited range of commands. Accordingly, there would be a corresponding reduction in the overhead load, and the command interpreting part can be enabled to operate faster.

The burst transfer speed according to the SCSI specifications is 10 Mbytes/sec at the maximum, and the effective speed is at most 3 to 5 MBytes/sec. By contrast, the transfer speed according to the ATAPI specifications is 16.6 MBytes/sec at the maximum, which is actually realized, and accordingly it is made possible to increase the speed by connecting the ATAPI-specified hard disk to the SCSI bus.

The bus conversion adapter 40, which is thus intended for connection of the ATAPI-specified hard disk 31 to, consists of the bus width changing logic 41, the interface changing logic 42, the SCSI control logic 43 and the ATAPI control logic 44, and makes possible matching of the SCSI bus and the ATAPI bus by matching the command systems while changing the bus width between the SCSI bus and the ATAPI bus during the shifting among the eight phases on the SCSI bus.

In the above-described mode of implementation, command conversion is accomplished merely by adding dummy data onto the ATAPI side in the sense that the ATAPI-specified hard disk 31 is connected to the SCSI bus. However, considering hard disks in general, many conform to the ATA specifications (the so-called IDE specifications), but the above-described ATAPI specifications constitute a superior concept, and therefore are not necessarily compatible with the command system of an ATA-specified hard disk. Of course they overlap each other in the reading and writing of data, which belong to the intrinsic specifications of a hard disk, and the difference lies only in the command system.

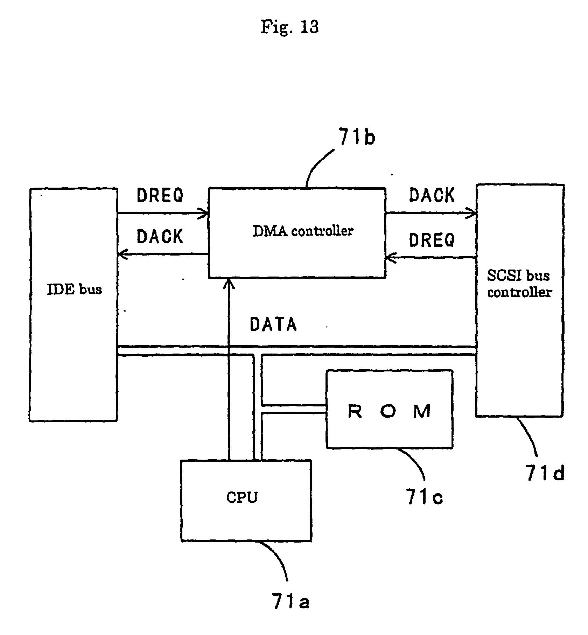

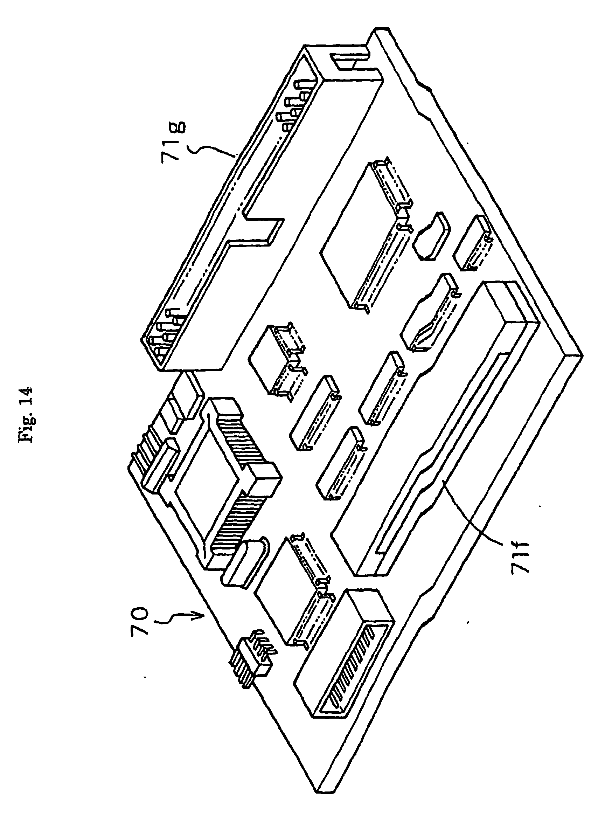

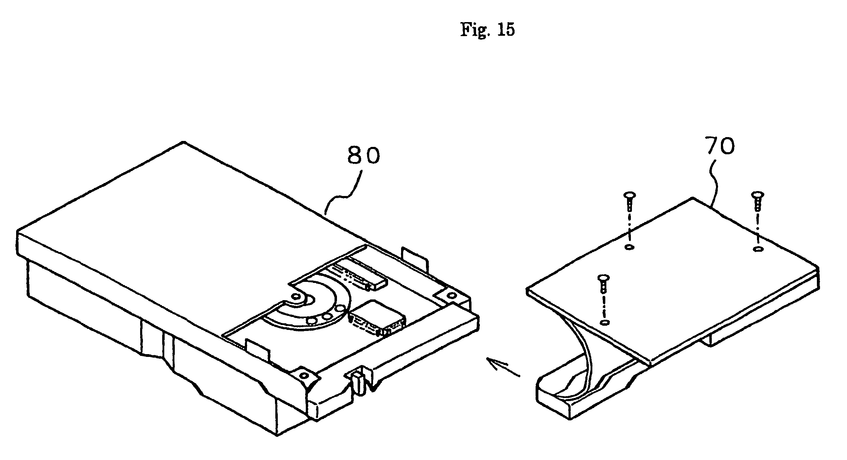

Fig. 13 is a schematic block diagram of a bus conversion adapter for connecting such an IDE-specified hard disk to an SCSI bus to make it the target drive; Fig. 14 shows its external appearance in a perspective view; and Fig. 15 illustrates how it is mounted on the hard disk in a perspective view.

In the case of the bus conversion adapter 70 in this mode of implementation, schematically speaking, command conversion is realized with a CPU 71a and, at the same time, data conversion is realized with a DMA controller 71b. Of course, the CPU 71a also controls the aforementioned DMA controller 71b at the same time. Here, an ROM 71c stores the control program for the CPU 71a, and a SCSI bus controller 71d realizes both basic interfacing with the SCSI bus and changing the data bus width. Thus, regarding the data bus width, as illustrated in Fig. 3, while the data on the SCSI bus are on a byte basis, those on an IDE bus-specified hard disk 80 are on a word basis, and this SCSI bus controller 71d itself automatically changes this data bus width. Therefore, for the CPU 71a, there is no need to consider any difference in data bus width all the time.

Further, as illustrated in Fig. 14 and Fig. 15, this bus conversion adapter 70 is provided with a connector terminal 75a for the SCSI bus and a connector terminal 75b for the IDE bus and, by fixing the prescribed connector to the IDE bus-specified hard disk 80 by bolting, the hard disk 80 can be regarded as being identical to a SCSI bus-specified hard disk.

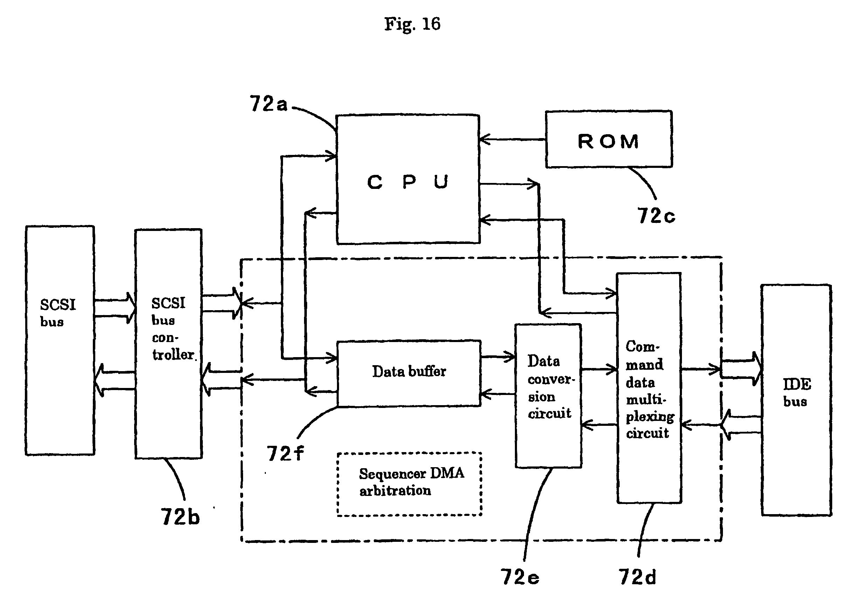

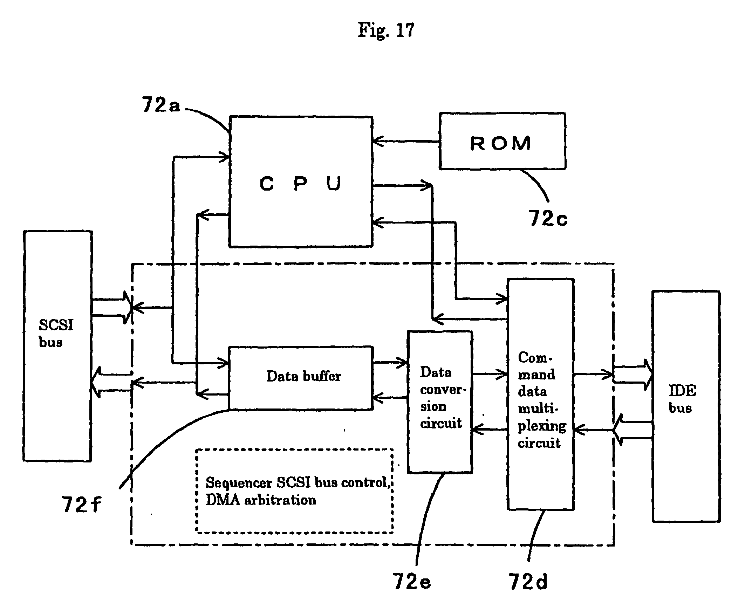

Next, Fig. 16 is a block diagram more functionally representing the bus conversion adapter shown in Fig. 13. In this bus conversion adapter 72, while a CPU 72a, a SCSI bus controller 72b and a ROM 72c are substantially the same as in the foregoing, its configuration is provided with a command data multiplexing circuit 72d for inputting/outputting commands and data to and from the IDE bus, a data conversion circuit 72e and a data buffer 72f for use when inputting/outputting data. Further in this example, while simplification of the circuitry is attempted by using the SCSI bus controller 72b, even the SCSI bus controller 72b can be dispensed with if interfacing with the SCSI bus is realized with software in the CPU 72a as shown in Fig. 17.

A configuration to eliminate the difference in command system between the IDE bus and the SCSI bus and to make possible data transfers by eliminating the difference in data bus does not necessarily require the intervening presence of a CPU, but many other configurations are available.

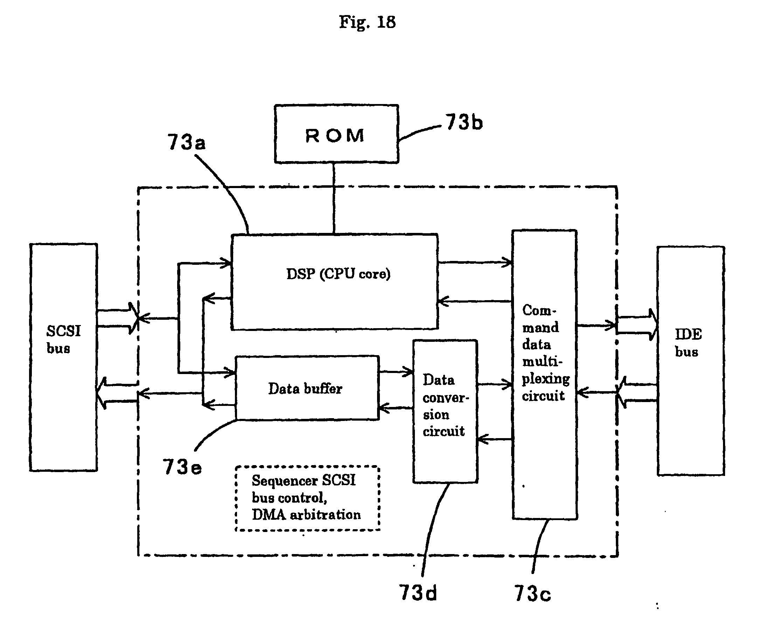

The bus width changing adapter 73 shown in Fig. 18, representing a configuration using a general purpose digital signal processor or the like, is provided with, in addition to a digital signal processor or a CPU core 73a, a program ROM 73b, and other elements of the configuration include a command data multiplexing circuit 73c for inputting/outputting commands and data to and from the IDE bus, a data conversion circuit 73d and a data buffer 73e for use in the inputting/outputting of data.

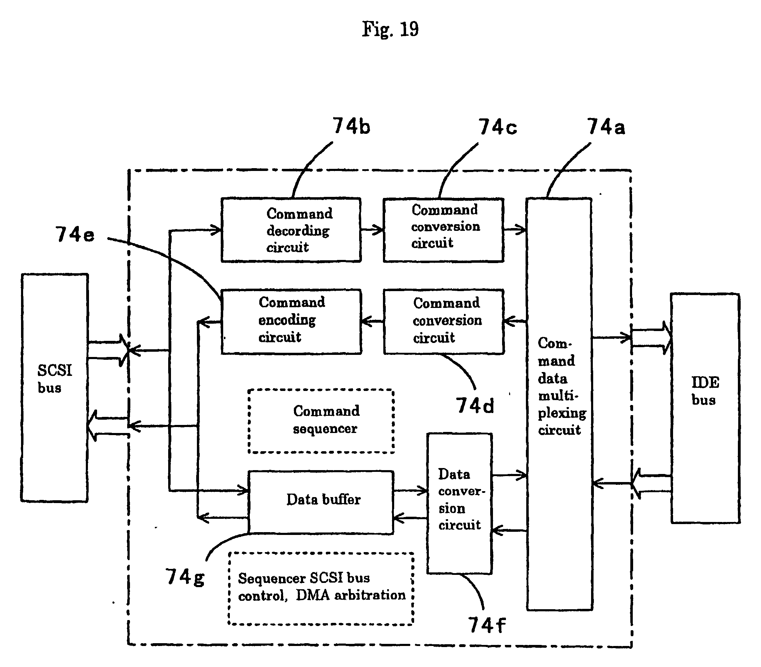

In the bus conversion adapter 74 illustrated in Fig. 19, the object is realized solely with logic circuits of the hardware, and its configuration comprises a command data multiplexing circuit 74a for inputting/outputting commands and data to and from the IDE bus, a command decoding circuit 74b for decoding commands on the SCSI side, a command conversion circuit 74c for conversion into commands for the IDE bus on the basis of the result of decoding, a command conversion circuit 74d for converting commands for the IDE bus into commands for the SCSI bus, and a command encoding circuit 74e for outputting converted commands actually onto the SCSI bus, further provided with a data conversion circuit 74f similar to the aforementioned, and a data buffer 74g for use in the inputting/outputting of data.

Where everything is to be realized with hardware logic circuits, the processing speed can be enhanced, but the circuit configuration becomes more complex.

Next, referring back to the mode of implementation shown in Fig. 13, its operation will be described.

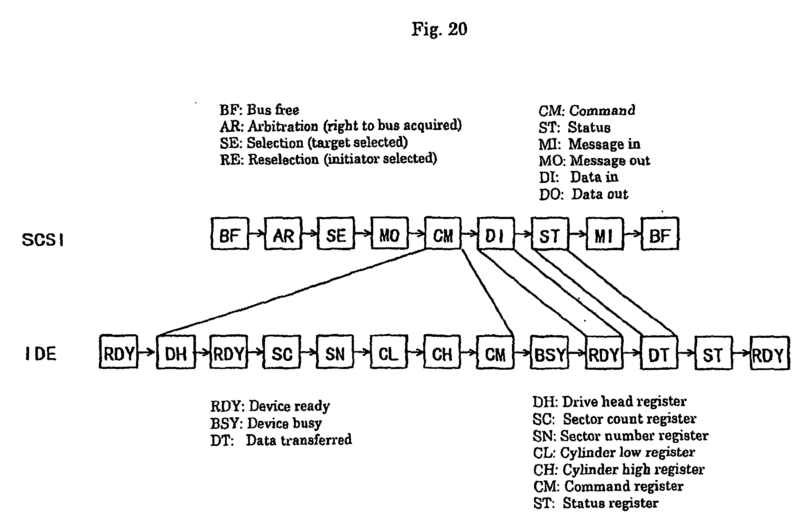

Fig. 20 compares the command system on the SCSI bus and that on the IDE bus. Incidentally, the illustration of this diagram is at a finer level than the phase shifts shown in Fig. 6. As stated above, the phase shifts on the SCSI bus correspond to the sequence on the IDE bus. Further, the command phase on the SCSI corresponds to the processing on the IDE bus-specified hard disk 80 to set a prescribed value in a register and deliver a command.

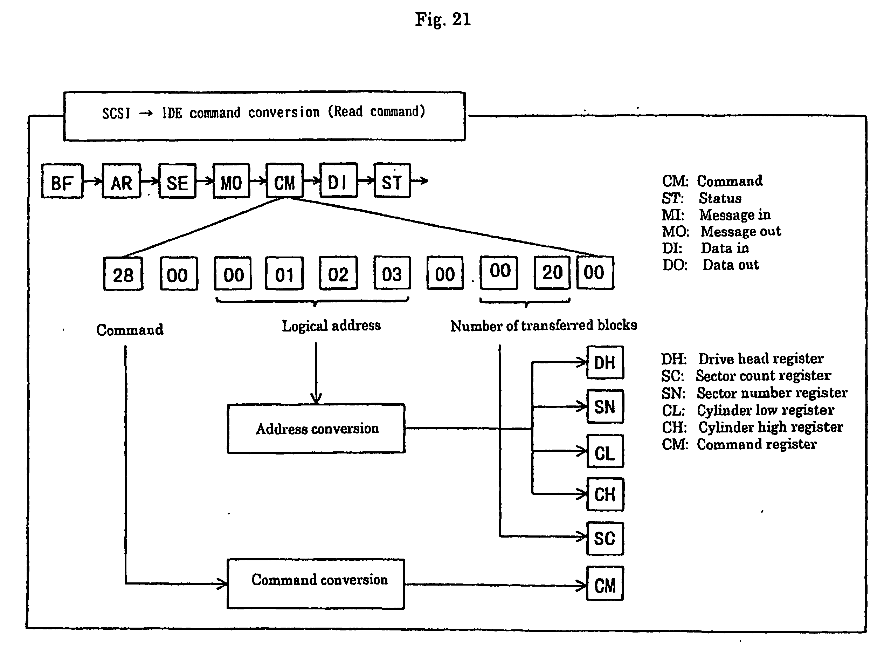

As an example, how a SCSI read command is converted is illustrated in Fig. 21. Whereas a logical address and the number of blocks transferred are inputted together with a command in the command phase on the SCSI, in order to output the command to the IDE bus-specified hard disk 80, it should be outputted in a state wherein the logical address and the number of blocks are set in a prescribed register. In this case, of course, the command on the SCSI bus is converted into a command for the IDE bus to be outputted.

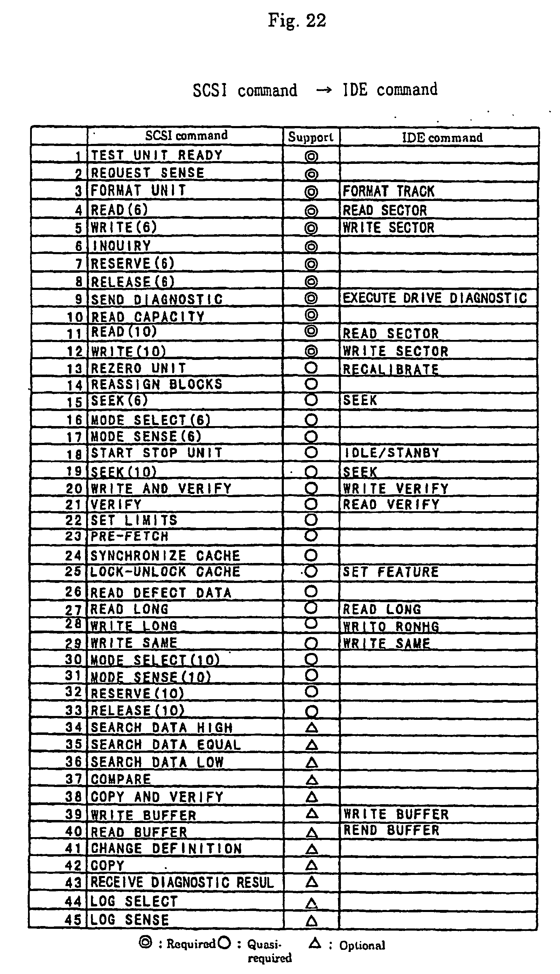

Fig. 22 is a table showing the relationships of correspondence between SCSI commands and IDE commands needed where a usual hard disk is to be used. The commands are classified into ones whose realization is required, quasi-required or optional according to the content and level.

When a SCSI read command has been converted into an IDE bus command in this manner, a data transfer is started. Where a difference in command system is to be processed with software, the CPU 71a is to intervene in the inputting/outputting, and the transfer speed is inevitably slowed because processing to read data in, pass judgment on the data read in and deliver them outside is required. For this reason, in this mode of implementation, the data transfer is realized by a DMA system by providing the DMA controller 71b. Incidentally, this case is not DMA in the strict sense, but it is referred to as DMA in the sense that data are transferred using a bus without having a so-called CPU in-between.

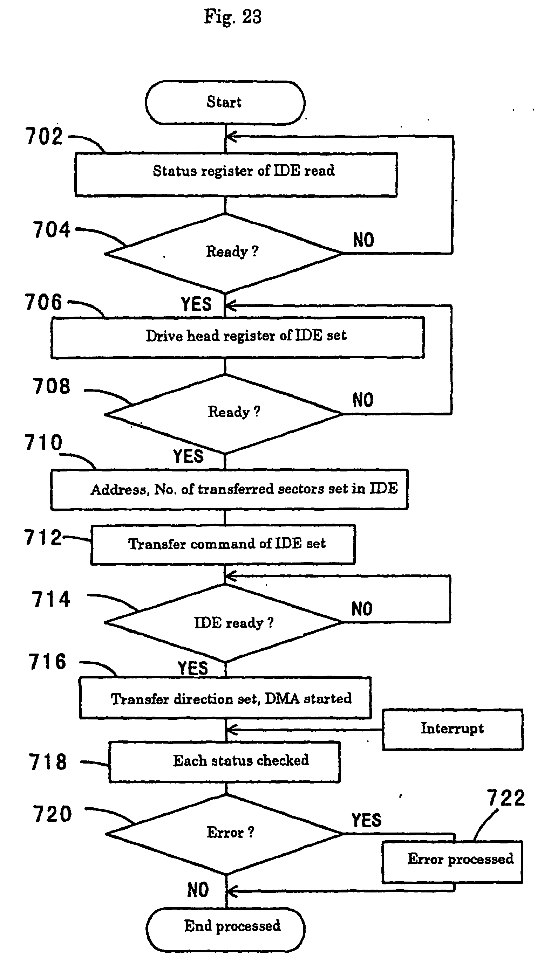

The control flow at the time of a DMA transfer where the DMA transfer is supported by the SCSI bus controller 71d is shown in Fig. 23. As illustrated, the status register on the IDE bus side is read in at step 702, and this action is repeated until it is judged at step 704 that preparation has been completed. This is an action to confirm that the IDE bus side is not in a busy state, and after that, at step 706, the drive head register of the IDE bus is set. At step 708, the status on the IDE bus side is read in again to judge whether or not the preparation has been completed.

If the IDE bus side is ready for the data transfer, the logical transfer address and the number of sectors to be transferred for the IDE bus side are set at step 710, and a transfer command to the IDE bus side is set at step 712. Step 714 is a step of processing to judge whether or not preparation for the data has been completed on the IDE bus side and, if the preparation is completed, the transferring direction will be instructed and a DMA transfer started at step 716.

Upon start of the DMA transfer, the CPU 71a is released. And, as the DMA controller 71b interrupts into the CPU 71a upon completion of the DMA transfer, the CPU 71a checks each status at step 718 and, if judges at step 720 that no error has occurred, will complete the DMA transfer processing or, if it has judged that any error has occurred, it will complete DMA transfer processing after disposing of the error at step 722.

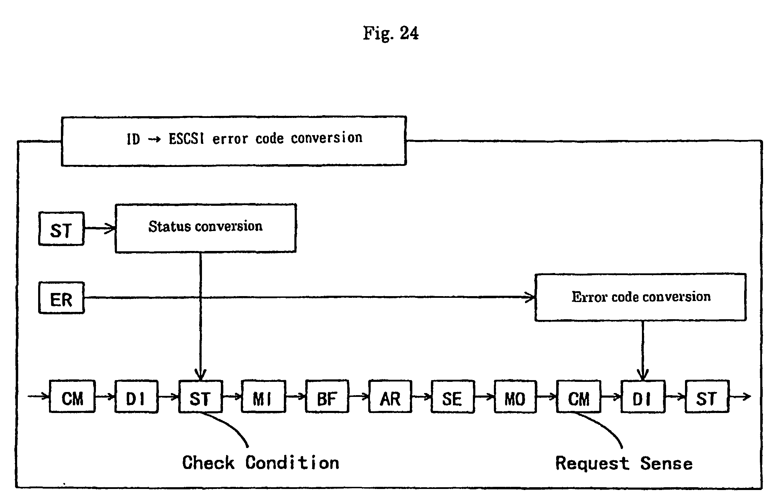

Processing of error notification from the IDE bus to the SCSI is illustrated in Fig. 24. Since this has to be done in accordance with the SCSI procedure, by notifying the error status on the IDE bus as a check condition in the status phase of the SCSI, the SCSI is enabled to output a request sense in the next command phase of the SCSI, and correspondingly an error code is notified in the data in phase.

Of course the above-described command conversion is but one example of processing to be accomplished between the SCSI bus and the IDE bus, but bus conversion can be realized very flexibly by utilizing the CPU 71a.

## Claims

1. A SCSI-IDE bus conversion adapter (72) intervening between a SCSI bus and an IDE bus, which are different systems, to accomplish matching between the buses, **characterized in that** it comprises:
a command interface conversion means (71a) for accomplishing mutual matching between command system while matching commands on the IDE side by adding dummy command data to commands on the SCSI side; and
a data bus conversion means (71b) for, when different data bus width are to be matched and data are to be transferred between the SCSI bus and the IDE bus, inputting or outputting through even number addresses data on the IDE side to or from the SCSI side and then inputting or outputting odd number address data, and having a direct transferring means for transferring, at the time of transferring data, data between the two buses in accordance with a DMA system.

2. A SCSI-IDE bus conversion adapter (72), as claimed in claim 1 above, **characterised in that** said command interface conversion means (71a) has a command data interpreting means (71d), for interpreting commands inputted from one of the buses and a command generating means (72e) for generating and outputting commands on the other bus corresponding to the interpreted commands.

## Patentansprüche

1. SCSI-IDE-Busumformungsadapter (72), der zwischen einem SCSI-Bus und einem IDE-Bus, die unterschiedliche Systeme sind, geschaltet ist, um eine Anpassung zwischen den Bussen zu erreichen,
**dadurch gekennzeichnet, dass** er umfasst:
ein Befehlsschnittstellen-Umformungsmittel (71a) zum Erreichen einer gegenseitigen Anpassung zwischen Befehlssystemen, während Befehle an der IDE-Seite durch Hinzufügen von Platzhalterbefehlsdaten zu Befehlen an der SCSI-Seite angepasst werden; und
ein Datenbus-Umformungsmittel (71 b) zum, wenn unterschiedliche Busdatenbreiten angepasst werden sollen und Daten zwischen dem SCSI-Bus und dem IDE-Bus übertragen werden sollen, Eingeben oder Ausgeben durch geradzahlige Adressendaten an der IDE-Seite zu oder von der SCSI-Seite und dann Eingeben oder Ausgeben ungeradzahliger Adressdaten, und das ein Direktübertragungsmittel aufweist, um während der Datenübertragung Daten zwischen den zwei Bussen gemäß einem DMA-System zu übertragen.

2. SCSI-IDE-Busumformungsadapter (72), wie im obigen Anspruch 1 beansprucht, **dadurch gekennzeichnet, dass** das Befehlsschnittstellen-Umformungsmittel (71a) ein Befehlsdaten-Interpretationsmittel (71d) zum Interpretieren von Befehlen, die von einem der Busse eingegeben werden, sowie ein Befehlserzeugungsmittel (72e) zum Erzeugen und Ausgeben von Befehlen an dem anderen Bus entsprechend den interpretierten Befehlen aufweist.

## Revendications

1. Adaptateur de conversion de bus SCSI-IDE (72) intervenant entre un bus SCSI et un bus IDE, qui sont des systèmes différents, pour accomplir une correspondance entre les bus, **caractérisé en ce qu'**il comprend :
un moyen de conversion d'interface de commande (71a) pour accomplir une correspondance mutuelle entre le système de commande tout en faisant correspondre les commandes du côté IDE en ajoutant des données de commande fictives aux commandes du côté SCSI ; et
un moyen de conversion de bus de données (71b) pour, lorsque différentes largeurs de bus de données doivent concorder et des données doivent être transférées entre le bus SCSI et le bus IDE, entrer ou sortir des données d'adresse en nombre pair du côté IDE vers ou depuis le côté SCSI, puis entrer ou sortir des données d'adresse en nombre impair, et ayant un moyen de transfert direct pour transférer, au moment du transfert des données, les données entre les deux bus conformément à un système DMA.

2. Adaptateur de conversion de bus SCSI-IDE (72), selon la revendication 1 ci-dessus, **caractérisé en ce que** ledit moyen de conversion d'interface de commande (71a) comporte un moyen d'interprétation de données de commande (71d), pour interpréter les commandes entrées depuis un des bus et un moyen de génération de commandes (72e) pour générer et sortir des commandes sur l'autre bus correspondant aux commandes interprétées.
